# EUROPEAN PATENT APPLICATION

(11) **EP 1 524 618 A1**
(43) Date of publication of application: **20.04.2005**
(21) Application number: 04009549.9
(22) Date of filing: 22.04.2004
(51) Int. Cl.: G06F 17/60

(54) **Automated event creation**

(30) Priority: 16.10.2003 US 686855
(71) Applicant: Hewlett-Packard Development Company, L.P., Houston, TX 77070 (US)
(72) Inventor: Cozier, Robert, P., Fort Collins, CO 80528 (US)
(74) Representative: Schoppe, Fritz, Dipl.-Ing.

(57) **Abstract**

Systems (10) and methods (50, 60) that implement automated event creation for use in storing files relating to an event that is to occur at a predetermined time in the future. An exemplary system comprises a computer device (30), a peripheral device (10), and software, or folder creation apparatus, (33) that creates a folder (20) on the peripheral device when it is connected to the computer device into which files that are created on the peripheral device are automatically placed. One exemplary method accepts (51) an event on a computer device, connects (52) a peripheral device to the computer device, creates (53) a folder for the event on the connected a peripheral device, and after the predetermined time, automatically places (54) files that are created on the peripheral device into the folder. Another exemplary method configures (61) a computer device to allow a peripheral device to connect to it, at the time of the event, connects (62) the peripheral device to the personal computer, and upon connection, creates (63) a folder on the connected peripheral device, into which files that are created on the peripheral device are automatically placed (64).

## Description

### TECHNICAL FIELD

The present invention relates generally to computer devices such as digital camera systems, for example, and related methods.

### BACKGROUND

Current digital camera systems, such as those heretofore manufactured by the assignee of the present invention, may store hundreds or thousands of pictures. The problem of finding a specific picture on a camera with this many pictures poses a major challenge for users.

In particular, guessing is required if automated searching is based on date and/or time that the picture was taken. If manual searching is used, a great deal of typing or selection is required on the camera to name files or folders.

### SUMMARY OF THE INVENTION

The present invention provides for improved systems and methods that implement automated event creation. In general terms. exemplary embodiments of the present invention provide for an event creation system for use in storing files relating to an event that is to occur at a predetermined time in the future. An exemplary system comprises a computer device, a peripheral device that is connectable to the computer device, and software, or folder creation means, running on the computer device which creates a folder on the peripheral device when it is connected to the computer device into which files that are created on the peripheral device after the predetermined time are automatically placed.

One exemplary method comprises accepting an event on a computer device, connecting a peripheral device designated for use at the event to the computer device, creating a folder for the event on the connected a peripheral device, and after the predetermined time, automatically placing files that are created on the peripheral device into the folder.

Another exemplary method comprises configuring a computer device to allow a peripheral device to connect to it, at the time of the event, connecting the peripheral device to the personal computer, and upon connection, creating a folder on the connected peripheral device, into which files that are created on the peripheral device are automatically placed.

### BRIEF DESCRIPTION OF THE DRAWINGS

The various features and advantages of embodiments of the present invention may be more readily understood with reference to the following detailed description taken in conjunction with the accompanying drawings, wherein like reference numerals designate like structural elements, and in which:
Fig. 1 illustrates an exemplary embodiment of e-mail based event creation in accordance with the principles of the present invention;
Fig. 2 is a flow diagram illustrating an exemplary e-mail based event creation method in accordance with the principles of the present invention;
Fig. 3 illustrates an exemplary embodiment of dock based event creation in accordance with the principles of the present invention; and
Fig. 4 is a flow diagram illustrating an exemplary dock based event creation method in accordance with the principles of the present invention.

### DETAILED DESCRIPTION

Several embodiments of the present invention are disclosed. The first relates to e-mail based event creation, and the second relates to dock based event creation. The embodiments described below are embodied in digital cameras, although the present invention is not limited to digital cameras. Other computer devices may be readily adapted to implement the present invention. For example, personal computers, handheld computers, personal digital assistants (PDAs), and cellular telephones, and the like, may embody the present invention.

Referring to the drawing figures, Fig. I illustrates an exemplary embodiment of e-mail based event creation in accordance with the principles of the present invention using an exemplary digital camera 10 connected (docked) to an exemplary personal computer 30. The personal computer 30 is connected to a network 31 (fixed or wireless) that allows receipt of e-mail.

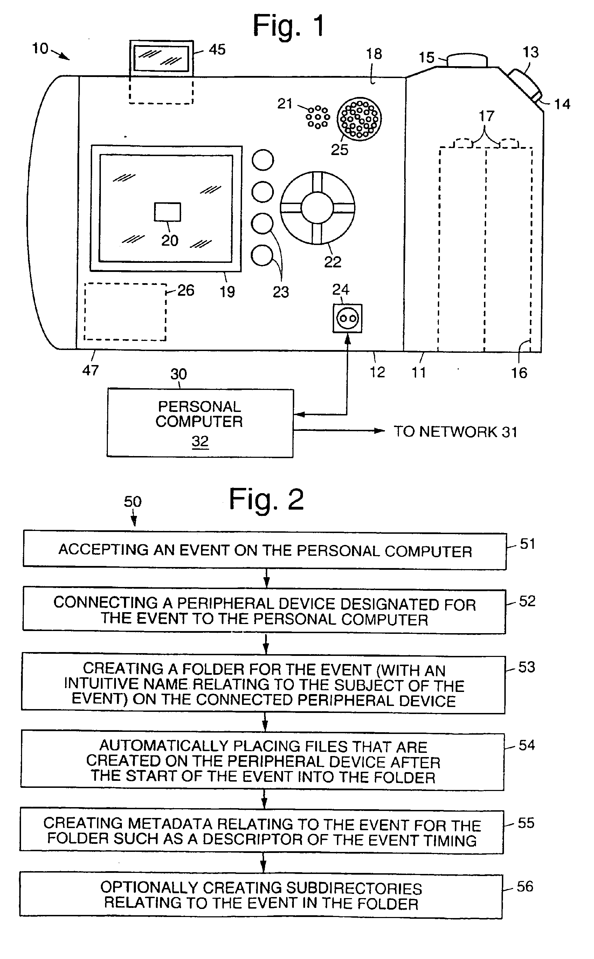

As is shown in Fig. 1, the exemplary digital camera 10 comprises a handgrip section 11 and a body section 12. The handgrip section 11 includes a power button 13 having a lock latch 14, a record button 15, and a battery compartment 16 for housing batteries 17.

A rear surface 18 of the body section 12 comprises a display 19, such as a liquid crystal display (LCD) 19 or viewfinder 19, a microphone 21, a joystick pad 22, a plurality of buttons 23 for setting functions of the camera 10, an output port 24 for downloading images to a computer, for example, and a speaker 25. Processing circuitry 26 is housed within the body section 12. The processing circuitry 26 that implements various functions of the digital camera 10.

Fig. 2 is a flow diagram illustrating an exemplary e-mail based event creation method 50 in accordance with the principles of the present invention. Referring to Fig. 2, meetings may be scheduled via e-mail, for example. Creation of folders 20 on the digital camera 10 is an extension of this meeting scheduling. The meeting is one that is to occur at a future time.

In general, the method 50 is used to store files relating to an event that is to occur at a predetermined time in the future. An event is accepted 51 on a computer device 30. A peripheral device 10 designated for use at the event is connected 52 to the computer device. A folder 20 is created 53 for the event on the connected a peripheral device. After the predetermined time, files that are created on the peripheral device are automatically placed 54 into the folder.

By way of example, rather than accepting a meeting, one would accept 51 an event on the personal computer 30, which is representative of the meeting, and a peripheral device designated for the event, such as the docked digital camera 10, handheld personal computer, or PDA, for example, is connected 52 to the personal computer 30. A folder 20 (with an intuitive name relating to the subject of the email, for example) is created 53 on the docked camera 10 for the event. The folder 20 can have metadata relating to the event created 54 for it, depending upon the operating system of the device. The metadata may simply be a descriptor of the event timing, for example.

When the meeting is attended, all data and images recorded by the digital camera 10 (or handheld personal computer. or PDA) are placed in the folder 20 relating to the meeting (event). Therefore, to view data and images relating to the meeting, all that is necessary is to access files in the designated folder 20 for the meeting to obtain the data and images.

An example may be helpful. Let's say my son is to have a birthday party. I will invite guests, in this case via e-mail. In my case, when I send out the e-mail message, software 32 on the personal computer 30 communicates with the docked camera 10 to create an event folder 20, supplying times and dates (metadata) for the event (birthday party) which are stored in a convenient manner.

When I attend the party, the camera 10 automatically will look for the folder 20 having the date and time corresponding to the event, and will place any pictures that are taken or other data, such as text notes, in this folder 20. Guests invited to the party may also bring a camera 10 or other device 10 to the party which in turn will also have a folder 20 created on it for the birthday party. If the guests do not attend, for example, if they are busy and do not accept the invitation, either a folder is created on their device which is not used and which is discarded if it is empty after the event. Creation of images or files after the time set for the birthday party initiates storage of the files in the folder 20 on the device 10.

It is to be understood that any file system may be configured to work in the manner described above, so that any personal computer 30, handheld computer, PDA, or cell phone, for example, may be configured to organize folders by event. In this case, lets say I am going to attend a patent workshop. I would probably have been invited, in which case the software 32 on my personal computer 30 would create a file folder 20 for the event (patent workshop). Similar to actions performed by the peripherals (digital camera 10, etc.) discussed above, the personal computer 30 will now put any files that are created on my computer 30 in this file folder 20. Files that are placed in this file folder 20 may be controlled in terms of dates and/or times associated with the event, for example.

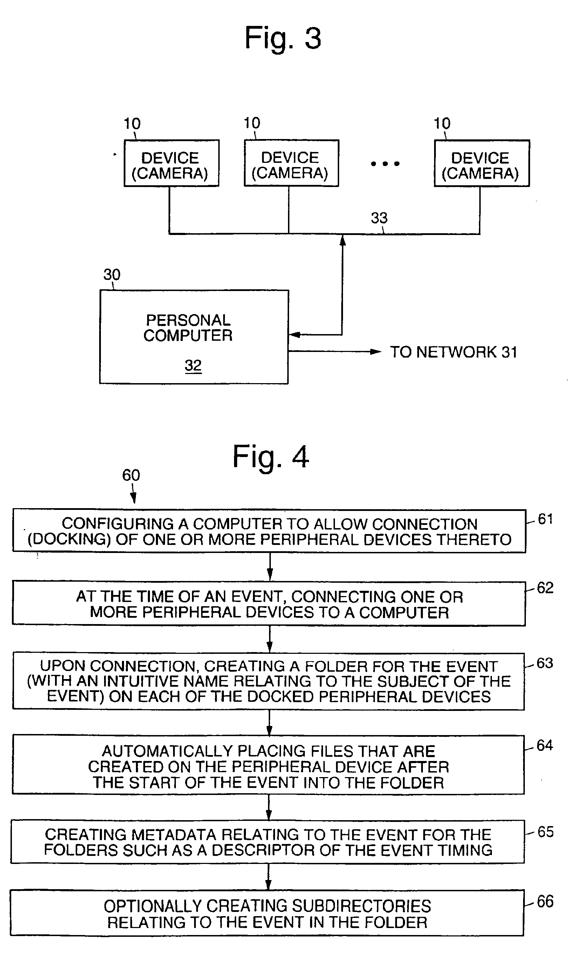

The second embodiment of the present invention involves dock based event creation, which is more specific to peripheral devices 10, such as digital cameras 10, for example. Fig. 3 illustrates an exemplary embodiment of dock based event creation in accordance with the principles of the present invention. Fig. 4 is a flow diagram illustrating an exemplary dock based event creation method 60 in accordance with the principles of the present invention.

By way of example, my personal computer 30 is configured 61 to allow a group of cameras 10 to be connected to (or plugged into) it at the time of my son's birthday party. This may be achieved using universal serial bus (USB) connections 33, dock 34, or network connection 31 for example.

As guests arrive at the birthday party, they connect 62 their cameras 10 to my personal computer 30 by way of my dock 34, or plug into the personal computer 30 using universal serial bus (USB) connections 33, or come within range of my wireless network 31, or come within range of my camera 10, for example. The interface or connection 33 of the guests' cameras 10 to my personal computer 30 allows the software 32 on my personal computer 30 to create 63 a folder 20 on each of the connected cameras 10 in the same manner as was discussed above. The software 32 may also be used to create 64 metadata, supplying times and dates (metadata) for the event (birthday party) which are stored in a convenient manner.

With regard to any of the embodiments disclosed herein, it should be noted that subdirectories may also be created 55, 65 in the same way as the file folders 20 by creating an agenda. An example is a wedding. Possible subdirectories would be: wedding, cut cake, first dance, leaving, and so forth.

The present invention allows folders 20 to be named with convenient and intuitive naming conventions. The present invention allows automated downloads to devices 10 to maintain these naming conventions as well making data much easier to locate. The present invention extends intuitive models of scheduling with organizing. The automation of the creation of events eliminates the need for the user of the camera 10 to guess at an event (i.e., power cycling of the camera 10, and or date and time since last use.)

Thus, it can be seen that the present automates the task of event creation such that, for example, a folder 20 is created on a digital camera 10 that is operative to have pictures automatically stored in the folder 20 starting at the time of the event, and that may be viewed by a user after the event. Automatic storage of pictures in a particular folder 20 on a digital camera is a function of the event or function that the folder 20 relates to. Folders 20 identify each particular event of interest and contain pictures relating thereto.

Because the folders 20 are event related, they drastically reduce the number of items that must be scanned through in order to find specific pictures, for example, by perhaps an order of magnitude. The present invention automates capture and playback (or viewing) of pictures or images in such a way as to mimic the experience of capturing the image by the user.

Thus, improved computer devices, such as digital camera systems, and improved methods that implement automated event creation have been disclosed. It is to be understood that the above-described embodiments are merely illustrative of some of the many specific embodiments that represent applications of the principles of the present invention. Clearly, numerous and other arrangements can be readily devised by those skilled in the art without departing from the scope of the invention.

## Claims

1. An event creation system (10) for use in storing files relating to an event that is to occur at a predetermined time in the future, comprising:
a computer device (30);
a peripheral device (10) that is connectable to the computer device; and
software (33) running on the computer device which creates a folder (20) on the peripheral device when it is connected to the computer device into which files that are created on the peripheral device after the predetermined time are automatically placed.

2. The system (10) recited in Claim 1 which comprises an e-mail based event creation system (10), wherein the computer device (30) is capable of receiving an e-mail message relating to an event that is to occur at a predetermined time in the future, and wherein the software (33) is responsive to receipt of the e-mail message and which creates the folder (20) on the peripheral device.

3. The system (10) recited in Claim 1 which comprises a dock based event creation system (10), wherein the computer device (30) is capable of connecting to multiple peripheral devices (10), and wherein the software (33) is responsive to the connections of the peripheral devices to the computer device to create a folder (20) on each of the peripheral devices into which files that are created after the predetermined time are automatically placed.

4. The system (10) recited in Claim 1 wherein the folder (20) has metadata relating to the event created for it, that is a descriptor of the event timing.

5. A method (50) for use in storing files relating to an event that is to occur at a predetermined time in the future, comprising the steps of;
accepting (51) an event on a computer device (30);
connecting (52) a peripheral device (10) designated for use at the event to the computer device;
creating (53) a folder (20) for the event on the connected peripheral device; and
after the predetermined time, automatically placing (54) files that are created on the peripheral device into the folder.

6. The method (50) recited in Claim 5 wherein the step of accepting (51) an event comprises an e-mail based event, and wherein receipt of the e-mail message creates (53) the folder (20) on the peripheral device.

7. The method (50) recited in Claim 5 wherein the folder (20) has metadata relating to the event created for it,

8. A method (60) for use in storing files relating to an event that is to occur at a predetermined time in the future, comprising the steps of;
configuring (61) a computer device (30) to allow a peripheral device (10) to connect to it;
at the time of the event, connecting (62) the peripheral device to the personal computer; and
upon connection, creating (63) a folder (20) on the connected peripheral device, into which files that are created on the peripheral device are automatically placed (64).

9. The method (60) recited in Claim 8 wherein the folder (20) has metadata relating to the event created for it,

10. The method (60) recited in Claim 8 wherein the metadata is a descriptor of the event timing.
